# EUROPÄISCHE PATENTSCHRIFT

(11) **EP 0 484 314 B1**
(45) Veröffentlichungstag und Bekanntmachung des Hinweises auf die Patenterteilung: **08.06.1994**
(21) Anmeldenummer: 91890255.2
(22) Anmeldetag: 25.10.1991
(51) Int. Cl.: B61D 25/00, B60J 1/10

(54) **Fenster für Fahrzeuge, insbesondere des Personenmassenverkehrs**
Vehicle window especially for mass transit vehicles
Fenêtre pour véhicules notamment pour les transports en commun

(30) Priorität: 29.10.1990 AT 2170/90
(43) Veröffentlichungstag der Anmeldung: 06.05.1992
(73) Patentinhaber: WIENER METALLWERK GMBH, A-2100 Korneuburg/Leobendorf (AT)
(72) Erfinder: Gemeinböck, Gerhard, A-1220 Wien (AT)
(74) Vertreter: Widtmann, Georg, Dipl.-Ing. Dr. techn.

(56) Entgegenhaltungen:
- EP-A- 0 013 978
- EP-A- 0 144 620
- EP-A- 0 243 307
- DE-A- 3 437 200
- FR-A- 2 346 177

## Beschreibung

Die Erfindung bezieht sich auf Fenster für Fahrzeuge, insbesondere des Personenmassenverkehrs, mit an der Fahrzeugwandung angeordnetem Rahmen.

Fenster an Fahrzeugen für den Massenverkehr, wie beispielsweise von Eisenbahnwaggons, haben eine Reihe von unterschiedlichen Aufgaben. Einerseits sollen sie einen möglichst ungestörten Ausblick der Passagiere aus dem Fahrzeuginneren gestatten, wobei auf Grund der selbst bei Fahrzeugen mit größtem Komfort auftretenden Erschütterungen eine elastische Lagerung der in der Regel aus anorganischem Glas bestehenden Scheiben erforderlich ist. Je nach Erfordernissen des Massenverkehrsmittels sind die Fenster öffenbar, wobei in diesem Falle in der Regel keine Klimaanlage vorliegt. Öffenbare Fenster können in unterschiedlicher Form, u. zw. mit einem Fallrahmen, in welchem die Glasscheiben angeordnet sind, oder auch mit einer schwenkbaren Klappe vorgesehen sein. Zum Zwecke der thermischen Isolierung ist es bereits vielfach vorgesehen, daß zumindest zwei Glasscheiben hintereinander angeordnet sind, wobei neben der thermischen Isolierung auch der Vorteil einer Schalldämmung erreicht wird.

Da Massenverkehrsmittel, wie beispielsweise Waggons für den schienengebundenen Verkehr in der Regel mit einer Metallkonstruktion aufgebaut sind, bestehen die geringsten Größenunterschiede bei thermischen Belastungen, wenn die entsprechenden Einbauten, wie Rahmen für Türen und Fenster ebenfalls aus Metall bestehen, so daß zwischen Waggonwandung und Rahmen, selbst bei großen Temperaturschwankungen, nur geringe Längenänderungsunterschiede, und diese zeitmäßig nur kurz verschoben auftreten. Innerhalb der metallischen Rahmen sind üblicherweise, so die Fenster öffenbar sein sollen, die Glasscheiben ihrerseits in weiteren metallischen Rahmen angeordnet.

Die metallischen Rahmen weisen jedoch den Nachteil auf, daß auf Grund der hohen Wärmeleitfähigkeit die inneren Teile des Rahmens annähernd die Außentemperatur des Rahmens aufweisen. Diese Temperaturen sind, wenn hohe Außentemperaturen auftreten, zwar energetisch ungünstig, da entsprechende Klimaanlagen im Waggon einen höheren Energieverbrauch bedingen. Bei niedrigen Außentemperaturen führt jedoch die Temperaturdifferenz im Inneren auf Grund der kalten Oberfläche der Metallrahmen und damit auch zwangsweise bedingt der gesamten inneren Glasscheibe zu einem hohen Unbehagen, das nicht mit einer Erhöhung der Raumtemperatur kompensiert werden kann. Aus diesem Grunde wurde vielfach versucht, Fensterrahmen derart aufzubauen, daß die Wärmebrücken zwischen den äußeren Teilen des Rahmens und den inneren Teilen des Rahmens möglichst geringgehalten sind. Dazu ist es z. B. aus der US-PS 2,280,389 und 2,895,184 bekannt, daß die Fensterrahmen über eigene umlaufende Dichtungen an der metallischen Außenwandung des Waggons anliegen. Damit wird zumindest erreicht, daß ein Temperaturunterschied zwischen der Waggonaußenwandung und Außenfläche des Rahmens bestehen kann, wie sie vielfach beispielsweise durch unterschiedlichen Anstrich bedingt ist oder auch bereits dadurch, daß im Rahmen eine Glasscheibe gehalten ist, die an sich eine schlechtere Wärmeleitfähigkeit besitzt, aber jedoch gleichzeitig zur Wärmeabgabe des Rahmens an die Umwelt beitragen kann.

Aus der AT-PS 343 173 oder EP.A.0 013 978, von welchem Stand der Technik die vorliegende Erfindung ausgeht, wird ein Fenster für Fahrzeuge bekannt, das einen äußeren und einen inneren Rahmen aufweist. Der äußere Rahmen ist über eine umlaufende Gummidichtung, die eine Nut aufweist, in der Fahrzeugaußenwandung gehalten. An dem äußeren Teilrahmen ist ein innerer Teilrahmen über Schrauben, die in einem Gewinde des äüßeren Teilrahmens festlegbar sind, gehalten. Der innere Teilrahmen seinerseits drückt über eine weitere Gummidichtung die Glasscheiben gegen eine umlaufende gummielastische Dichtung, die an dem äußeren Rahmen anliegt. Bei diesem Fenster kann auch eine Querstrebe vorgesehen sein, an welcher eine obere Klappe zur zugarmen Belüftung des Waggons angelenkt sein kann.

Aus der DD-PS 263 504 wird ein Dichtrahmen bekannt, bei welchem Teile des Rahmens miteinander verklebt sind. Dieser Klebstoff besteht insbesondere aus einer Ausschäumung des Hohlraumes, der zwischen den beiden Rahmenteilen gebildet ist.

Das erfindungsgemäße Fenster für Fahrzeuge, insbesondere des Personenmassenverkehrs, mit an der Fahrzeugwandung angeordnetem Rahmen, wobei ein äußerer Teilrahmen an der Fahrzeugwandung über eine gummielastische Schichte, z. B. Dichtung, lösbar anliegt, welcher weiters mit einem inneren Teilrahmen verbunden ist, wobei die Verbindungsfläche zwischen den beiden Teilrahmen im wesentlichen entlang der Fahrzeugwandung und insbesondere zum Fahrzeuginneren versetzt, angeordnet ist, und im Rahmen zumindest eine, insbesondere zwei, in Abstand voneinander vorgesehene Glasscheibe(n), vorzugsweise beweglich, angeordnet ist (sind), besteht im wesentlichen darin, daß der äußere Teilrahmen über Schrauben gegen die Fahrzeugwandung gehalten ist und der äußere und innere Teilrahmen entlang der Verbindungsfläche adhäsiv über eine Klebeschichte miteinander verbunden sind, welche eine geringere thermische Leitfähigkeit als das/die Material(ien) der Teilrahmen aufweist. Durch die Teilung der Rahmen in einem inneren und äußeren Teilrahmen kann eine besonders einfache Montage der Fenster durchgeführt werden, da beispielsweise ein Einlegen der Glasscheiben vor Verbinden des äußeren und inneren Rahmens erfolgt. Weiters können Profiie mit unterschiedlichsten Querschnitten, wie beispielsweise mit Hinterschneidungen, so daß geringere Warmebrücken vorgesehen sind, eingesetzt werden. Durch die Adhäsivverbindung des inneren Teilrahmens mit dem äußeren Teilrahmen über eine Klebeschichte, die eine geringere Wärmeleitfähigkeit als die Materialien der Rahmen, die in der Regel aus Metall aufgebaut sind, aufweist, kann erreicht werden, daß zwischen diesen beiden Rahmen keine Wärmebrücken, wie sie üblicherweise durch Schrauben, Schweißstellen od. dgl. bedingt sind, auftreten, bzw. es können aufwendige Konstruktionen, durch weiche mit Schaum oder ähnlichen Verbindungen thermisch isoliert wird, vermieden sein, wobei weiters die mechanische Stabilität, z. B. durch Ausgleich von Kräften zwischen dem äußeren und inneren Rahmen, wesentlich größer gehalten werden kann. Dadurch, daß der äußere Teilrahmen über Schrauben gegen die Fahrzeugwandung gehalten ist, kann bei der Montage eine exakte Positionierung durchgeführt werden, wobei weiters auch der Anpreßdruck des Rahmens gegen die Wandung, beispielsweise durch Verwendung von Drehmomentschlüsseln exakt geregelt werden kann, so daß eine einheitliche Abdichtung, unter Vermeidung von unterschiedlicher Druckbeanspruchung und damit gegebenenfalls unterschiedlicher Alterung des Dichtungsmaterials, erreichbar ist.

Weisen die Schrauben, mit welchen der äußere Teilrahmen gegen die Fahrzeugwandung gehalten ist, ihr Gegenlager in Gewindestücken auf, die jeweils von der Fahrzeugwandung entfernter sind als die jeweiligen Angriffsflächen für die Schrauben am äußeren Teilrahmen, so ist ein Klemmsitz des äußeren Teilrahmens an der Fahrzeugwandung realisiert, so daß einerseits Korrosionsangriffen ausgesetzte Bohrungen in der Fahrzeugwandung vermieden werden können, und anderseits zusätzliche Wärmebrücken durch Verbindungen zwischen Außenwandung und äußerem Rahmen vermieden werden können.

Um einen besonders gleichmäßigen Andruck des äußeren Teilrahmens an der Fahrzeugwandung zu erreichen, wobei gleichzeitig ein besonders geringer Wärmeübergang gewährleistet ist, greifen die Schrauben an einem umlaufenden Flansch des äußeren Teilrahmens an, welcher über eine gummielastische Schichte, z. B. Dichtung mit kreisförmigem Querschnitt, im Flansch an der Fahrzeugwandung anliegt.

Weist der innere Teilrahmen entlang der Verbindungsfläche eine Ausnehmung auf, welche größer als die Glasscheibe ist, so daß diese durch den inneren Teilrahmen dem Fenster entnehmbar ist, so kann bei bestimmten Konstruktionen ein Austausch der Glasscheiben, wie es beispielsweise bei Isolierglas erforderlich sein kann, leicht ermöglicht werden, wobei weiters auch die erwünschte Möglichkeit eines Notausstieges durch das Fenster ohne kraftaufwendige Zerstörung des Fensters leicht möglich ist.

Um eine besonders leichte und exakte Positionierung der Glasscheiben im Rahmen zu erreichen, weist der innere Teilrahmen ein, insbesondere umlaufendes, gummielastisches Profil im Klemmsitz auf, in welchem gegebenenfalls in einer umlaufenden Ausnehmung ein einklemmbares Füllstück angeordnet ist, durch welches das Profil gegen die Glasscheibe gedrückt ist. Eine derartige Konstruktion ermöglicht einerseits eine sehr gute Lagefixierung der Glasscheiben im Rahmen und anderseits kann durch Entfernen des Füllstückes das gummielastische Profil samt Glasscheiben besonders einfach entfernt werden, wodurch ohne zusätzliche Splitterung des Glases und Kraftanstrengung ein Notausstieg selbst für technisch unbegabte und körperlich mit geringen Kräften versehene Personen möglich ist.

Sind die Glasscheiben in einem weiteren Rahmen gehalten, welcher am Rahmen angeordnet ist, so ist ein öffenbares Fenster vorgesehen, wobei die mechanische Stabilität durch die mittelbare Befestigung an der Fahrzeugwandung besonders groß ist, so daß ein Verschieben und Klemmen besonders günstig vermieden wird.

Weist der weitere Rahmen einen äußeren und einen inneren Teilrahmen auf, welche miteinander über eine Klebeschicht, die eine geringere Wärmeleitfähigkeit als das Material der Rahmen besitzt, verbunden sind, so ist auch hier ohne zusätzliche thermische Abdeckungen od. dgl. eine mechanisch stabile thermische Isolierung gegeben, wobei die Profile der Rahmen, je nach Erfordernis, beliebig ausgestaltet sein können.

Ist am weiteren Rahmen ein Rahmen, insbesondere mit einem äußeren und inneren Teilrahmen, die über eine Klebeschicht adhäsiv verbunden sind, welche eine geringere Wärmeleitfähigkeit besitzt als die Materialien der Teilrahmen, befestigt, so ist eine Belüftungsklappe geschaffen, die eine besonders wirksame thermische Entkoppelung ermöglicht.

Ist der äußere Teilrahmen des angelenkten Rahmens am äußeren Teilrahmen des weiteren Rahmens angelenkt, so ist den unterschiedlichen Temperaturen und damit der Unterbindung von Wärmeleitung besonders einfach Rechnung getragen.

Eine weitere Wärmebrücke wird dadurch vermieden, daß der innere Teilrahmen des angelenkten Rahmens über eine Arretierung am inneren Teilrahmen des weiteren Rahmens festlegbar ist.

Sowohl die inneren als auch die äußeren Rahmen können umlaufende Ausnehmungen aufweisen, die beispielsweise mit schlecht wärmeleitenden Materialien, wie beispielsweise Schaumstoff, Faserstoffe od. dgl. gefüllt sein können. Es besteht somit die Möglichkeit, die einzelnen Teilrahmen aus Profilen aufzubauen, wie sie bereits entwickelt wurden, um besonders wenig Wärmebrücken zu erreichen, wobei durch die Anordnung von Füllstoffen eine Zirkulation von Gasen und damit ein bevorzugter Wärmeaustausch zwischen Flächen mit unterschiedlicher Temperatur besonders einfach unterbunden werden kann.

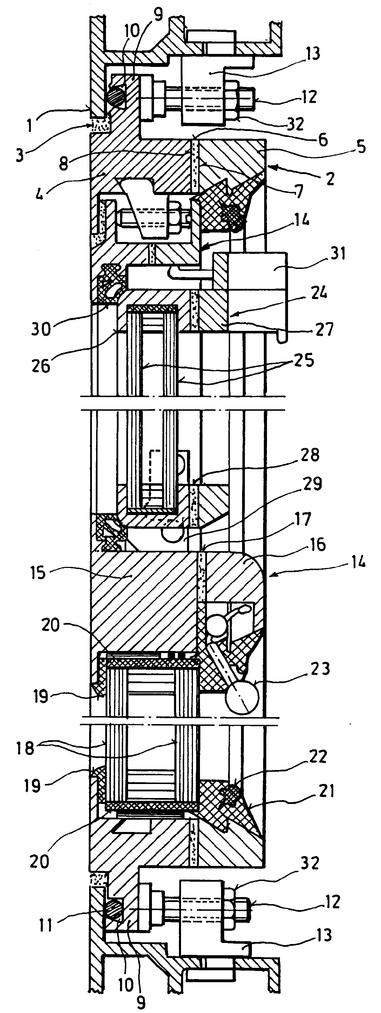

Im folgenden wird die Erfindung anhand der Zeichnung näher erläutert:

In der Zeichnung ist ein Fenster samt Fahrzeugwandung im Schnitt dargestellt, wobei die Bereiche der Scheiben jeweils verkürzt wiedergegeben sind.

Die Fahrzeugwandung 1 ist teilweise mit einem Profil gebildet. Der Rahmen 2 ist nun in der Fahrzeugwandung so angeordnet, daß er gegen die Innenseite derselben gedrückt ist, und mit der Außenseite der Fahrzeugwandung bündig abschließt, wobei der geringfügige Spalt 3 durch eine elastische in situ gebildete Dichtmasse ausgefüllt ist. Der Rahmen 2 besteht aus einem äußeren Teilrahmen 4 und inneren Teilrahmen 5, welche über eine Klebeschichte 6 verbunden sind. Sowohl der äußere als auch der innere Teilrahmen sind aus einer Leichtmetallegierung, insbesondere mit Aluminium, aufgebaut und weisen eine hohe Wärmeleitfähigkeit auf, wohingegen die Klebeschichte durch einen Schmelzkleber auf Basis von Polyethylen gebildet ist. Die Klebeschichte besitzt somit eine wesentlich geringere Wärmeleitfähigkeit als die beiden metallischen Teilrahmen. Die beiden Teilrahmen sind weiters in sich geschlossen umlaufend ausgebildet, so daß ein besonders exaktes Anliegen an der Außenwandung gegeben ist und die Verbindungsflächen 7, 8, die parallel zur Fahrzeugwand und zum Fahrzeuginneren versetzt sind, des inneren bzw. äußeren Teilrahmens vollkommen plan ausgeführt werden können, wodurch eine einfache Verbindung möglich wird. Bei der Verbindung der Teilrahmen mit dem Kleber in einer Spannrichtung, erfolgt die Einstellung der Dicke der Spaltdicke durch Keile.

Der äußere Teilrahmen 4 weist einen umlaufenden Flansch 9 mit einer umlaufenden Nut 10 auf. In der Nut 10 ist eine im Querschnitt kreisförmige Dichtung 11 angeordnet, über welche der äußere Rahmen an der Fahrzeugwandung 1 anliegt. Am Flansch greifen Stellschrauben 12 an, die mit einem in der äußeren Fahrzeugwandung 1 einhakbaren Gewindestück 13 kooperieren. Die Schrauben können an ihrem Ende einen Vielfachkant aufweisen, an welchem über einen Drehmomentschlüssel ein gleichmäßiger Andruck des äußeren Teilrahmens 4 an der Fahrzeugwandung 1 erreicht werden kann. Um eine Lagefixierung der Stellschrauben 12 zu erreichen, sind Kontramuttern 32 vorgesehen. Sowohl der äußere als auch der innere Rahmen können umlaufende Ausnehmungen aufweisen, um die Wärmeleitfähigkeit des Profiles zu mindern. In diesen Ausnehmungen sind sodann, wie an sich bekannt, Füllstoffe, beispielsweise auf Faserbasis, angeordnet. Eine andere Möglichkeit besteht darin, diese Ausnehmungen beispielsweise in situ auszuschaumen.

Im Rahmen 2 ist ein weiterer Rahmen 14 angeordnet, durch welchen eine Zweiteilung des Fensters in einen oberen und einen unteren Bereich erfolgt. Der Rahmen 14 weist seinerseits wieder einen äußeren Teilrahmen 15 und einen inneren Teilrahmen 16 auf, die über eine Klebeschichte 17 adhäsiv miteinander verbunden sind. In den äußeren Teilrahmen 4 und 15 liegen zwei in Abstand voneinander angeordnete anorganische Glasscheiben 18 über eine gummielastische Dichtung 19 an. Die Bewegung der Glasscheiben in vertikaler Richtung ist durch Dichtungen 20 begrenzt. Die Glasscheiben werden weiters durch ein umlaufendes gummielastisches Profil 21, das über Hinterschneidungen in den inneren Rahmen 5 und 16 fixiert ist, gehalten. Das umlaufende Gummiprofil 21 weist weiters ein Füllstück 22 auf, welches das Gummiprofil 21 gegen die innere anorganische Glasscheibe 18 gedrückt hält. Über den Handgriff 23 kann das umlaufende Füllstück 22 aus dem Gummiprofil entfernt werden, so daß die Glasscheiben samt Dichtungen aus dem Rahmen entnommen werden können, wobei die inneren Rahmen einen größeren freien Querschnitt, bezogen auf die Glasscheiben, freigeben als die äußeren Rahmen, so daß eine problemlose Entnahme der Glasscheiben in Notfällen ermöglicht ist. Am weiteren äußeren Teilrahmen 14 ist ein Rahmen 24 angeordnet, in welchem zwei in Abstand voneinander angeordnete Glasscheiben 25 vorgesehen sind. Der Rahmen 24 ist ebenfalls durch einen äußeren Teilrahmen 26 und inneren Teilrahmen 27 aufgebaut, welche über eine Klebeschichte 28 adhäsiv verbunden sind. Der äußere Teilrahmen 26 ist über eine Gelenkverbindung 29 am äußeren Teilrahmen angelenkt und liegt an demselben über eine Dichtung 30 an. Der innere Teilrahmen 27 weist eine Arretierung 31 auf, die ihrerseits am inneren Teilrahmen 14 des weiteren Rahmens angreift.

## Patentansprüche

1. Fenster für Fahrzeuge, insbesondere des Personenmassenverkehrs, mit an der Fahrzeugwandung (1) angeordnetem Rahmen (2), wobei ein äußerer Teilrahmen (4) an der Fahrzeugwandung (1) über eine gummielastische Schichte, z. B. Dichtung (11), lösbar anliegt, welcher weiters mit einem inneren Teilrahmen (5) verbunden ist, wobei die Verbindungsfläche (7, 8) zwischen den beiden Teilrahmen (4, 5) im wesentlichen entlang der Fahrzeugwandung (1) und insbesondere zum Fahrzeuginneren versetzt, angeordnet ist, und im Rahmen (2) zumindest eine, insbesondere zwei, in Abstand voneinander angeordnete Glasscheibe(n) (18), vorzugsweise beweglich, angeordnet ist(sind), dadurch gekennzeichnet, daß der äußere Teilrahmen (4) über Schrauben (12) gegen die Fahrzeugwandung gehalten ist und der äußere und innere Teilrahmen (4, 5) entlang der Verbindungsfläche (7, 8) adhäsiv über eine Klebeschichte (6) miteinander verbunden sind, welche eine geringere thermische Leitfähigkeit als das/die Material(ien) der Teilrahmen (4, 5) aufweist.

2. Fenster nach Anspruch 1, dadurch gekennzeichnet, daß die Schrauben (12), mit welchen der äußere Teilrahmen (4) gegen die Fahrzeugwandung (1) gehalten ist, ihr Gegenlager in Gewindestücken (13) aufweisen, die jeweils von der Fahrzeugwandung entfernter sind als die jeweiligen Angriffsflächen für die Schrauben am äußeren Teilrahmen (4).

3. Fenster nach Anspruch 2, dadurch gekennzeichnet, daß die Schrauben (12) an einem umlaufenden Flansch (9) des äußeren Teilrahmens (4) angreifen, welcher über eine gummielastische Schichte, z. B. im Querschnitt kreisförmige Dichtung (11), an der Fahrzeugwandung (1) anliegt.

4. Fenster nach Anspruch 1, 2 oder 3, dadurch gekennzeichnet, daß der innere Teilrahmen (5) entlang der Verbindungsfläche (7) eine Ausnehmung aufweist, welche größer als die Glasscheibe (18) ist, so daß diese durch den inneren Teilrahmen (5) dem Fenster entnehmbar ist.

5. Fenster nach Anspruch 4, dadurch gekennzeichnet, daß der innere Teilrahmen (5) ein, insbesondere umlaufendes, gummielastisches Profil (21) im Klemmsitz aufweist, in welches gegebenenfalls in einer umlaufenden Ausnehmung ein einklemmbares Füllstück (22) angeordnet ist, durch welches das Profil (21) gegen die Glasscheibe (18) gedrückt ist.

6. Fenster nach einem der Ansprüche 1 bis 5, dadurch gekennzeichnet, daß die Glasscheiben in einem weiteren Rahmen (14) teilweise gehalten sind, welcher am Rahmen (2) angeordnet ist.

7. Fenster nach Anspruch 6, dadurch gekennzeichnet, daß der weitere Rahmen (14) einen äußeren und inneren Teilrahmen (15, 16) aufweist, welche miteinander über eine Klebeschichte (17), die eine geringere Wärmeleitfähigkeit als das Material des Rahmens aufweist, verbunden sind.

8. Fenster nach einem der Ansprüche 1 bis 7, dadurch gekennzeichnet, daß am weiteren Rahmen (14) ein Rahmen (24), insbesondere mit einem äußeren und inneren Teilrahmen (26, 27), die über eine Klebeschichte (28) adhäsiv verbunden sind, welche eine geringere Wärmeleitfähigkeit besitzt als die Materialien der Teilrahmen (26, 27), angelenkt ist.

9. Fenster nach einem der Ansprüche 1 bis 8, dadurch gekennzeichnet, daß der äußere Teilrahmen (26) des angelenkten Rahmens (24) am äußeren Teilrahmen (15) des weiteren Rahmens (14) angelenkt ist.

10. Fenster nach einem der Ansprüche 1 bis 9, dadurch gekennzeichnet, daß der innere Teilrahmen (27) des angelenkten Rahmens (24) über eine Arretierung (31) am inneren Teilrahmen (15) des weiteren Rahmens (14) festlegbar ist.

11. Fenster nach einem der Ansprüche 1 bis 10, dadurch gekennzeichnet, daß die inneren und/oder äußeren Teilrahmen (4, 5 15, 16, 26, 27) umlaufende innere Ausnehmungen aufweisen, welche gegebenenfalls mit gering wärmeleitenden Materialien, z. B. Schaumstoff, Faserstoffe od. dgl., gefüllt sind.

## Claims

1. Window for vehicles, in particular for mass transportation of passengers, with a frame (2) disposed on the wall (1) of the vehicle, in which an outer sub-frame (4) rests detachably on the wall (1) of the vehicle through a rubber elastic layer, e.g. seal (11), and is additionally connected to an inner sub-frame (5), the connecting surface (7, 8) between the two sub-frames (4, 5) is essentially disposed along the wall (1) of the vehicle and in particular offset in relation to the interior of the vehicle, and at least one, in particular two panes (18) of glass disposed a distance from one another, are disposed, preferably movably, in the frame (2), characterised in that the outer sub-frame (4) is held against the wall of the vehicle by means of screws (12) and the outer and inner sub-frames (4, 5) are connected to one another adhesively along the connecting surface (7, 8) by means of a layer (6) of adhesive which exhibits a lower thermal conductivity than the material or materials of the sub-frames (4, 5).

2. Window according to claim 1, characterised in that the screws (12) with which the outer sub-frame (4) is held against the wall (1) of the vehicle, are supported in threaded elements (13) which are each further away from the wall of the vehicle than the respective bearing faces for the screws on the outer sub-frame (4).

3. Window according to claim 2, characterised in that the screws (12) bear on a peripheral flange (9) of the outer sub-frame (4) which rests on the wall (1) of the vehicle through a rubber elastic layer, e.g. seal (11) of circular cross-section.

4. Window according to claim 1, 2 or 3, characterised in that the inner sub-frame (5) exhibits a recess which runs along the connecting surface (7) and is larger than the pane (18) of glass so that this can be removed from the window through the inner sub-frame (5).

5. Window according to claim 4, characterised in that the inner sub-frame (5) exhibits an, in particular peripheral, rubber elastic profile (21) which is wedged in position and in which is disposed a filling piece (22) which can be wedged in a peripheral recess and through which the profile (21) is pressed against the pane (18) of glass.

6. Window according to one of claims 1 to 5, characterised in that the panes of glass are partially held in an additional frame (14) which is disposed on the frame (2).

7. Window according to claim 6, characterised in that the additional frame (14) exhibits an outer and inner sub-frame (15, 16) which are connected together by means of a layer (17) of adhesive which exhibits a lower thermal conductivity than the material of the frame.

8. Window according to one of claims 1 to 7, characterised in that a frame (24), in particular with an outer and inner sub-frame (26, 27) which are connected adhesively by means of a layer (28) of adhesive which has a lower thermal conductivity than the materials of the sub-frames (26, 27), is articulated on the additional frame (14).

9. Window according to one of claims 1 to 8, characterised in that the outer sub-frame (26) of the articulated frame (24) is articulated on the outer sub-frame (15) of the additional frame (14).

10. Window according to one of claims 1 to 9, characterised in that the inner sub-frame (27) of the articulated frame (24) can be locked to the inner sub-frame (15) of the additional frame (14) by means of a locking device (31).

11. Window according to one of claims 1 to 10, characterised in that the inner and/or outer sub-frames (4, 5, 15, 16, 26, 27) exhibit peripheral inner recesses which can be filled with materials with very low thermal conductivity, e.g. foam, fibrous materials or the like.

## Revendications

1. Fenêtre pour véhicule, en particulier pour véhicule de transport en commun, comportant un cadre (2) disposé dans la paroi (1) du véhicule, une partie de cadre (4) extérieure qui, par l'intermédiaire d'une couche élastique, par exemple d'un joint, prend appui avec possibilité de démontage sur la la paroi (1) du véhicule et est en outre liée à une partie de cadre (5) intérieure, la surface de liaison (7, 8) entre les deux parties de cadre (4, 5) étant disposée sensiblement le long de la paroi (1) du véhicule, notamment en étant décalée en direction de l'intérieur dudit véhicule, et au moins une, en particulier deux glace(s) (18) étant montées de préférence mobiles dans le cadre (2), à distance l'une de l'autre, caractérisée par le fait que la partie de cadre (4) extérieure est tenue sur la paroi du véhicule au moyen de vis (12) et que les parties de cadre extérieure et intérieure (4, 5) sont liées entre elles par collage le long de la surface de liaison (7, 8) au moyen d'une couche d'adhésif (6) qui présente une conductibilité thermique plus faible que celle du/des matériau(x) constituant les parties de cadre (4, 5).

2. Fenêtre selon la revendication 1, caractérisée par le fait que les vis (12) au moyen desquelles la partie de cadre (4) extérieure est tenue sur la paroi (1) du véhicule ont pour contre-appuis des éléments filetés (13) qui sont disposés à une distance de la paroi du véhicule plus grande que les surfaces d'appui concernées des vis sur la partie de cadre (4) extérieure.

3. Fenêtre selon la revendication 2, caractérisée par le fait que les vis (12) agissent sur un rebord (9) périphérique de la partie de cadre (4) extérieure qui prend appui sur la paroi (1) du véhicule par l'intermédiaire d'une couche élastique, par exemple d'un joint (11) à section circulaire.

4. Fenêtre selon la revendication 1, 2 ou 3, caractérisée par le fait que, le long de la surface de liaison (7), la partie de cadre (5) intérieure présente un évidement de dimensions supérieures à la glace (18) de telle sorte que celle-ci peut être démontée de la fenêtre à travers la partie de cadre (5) intérieure.

5. Fenêtre selon la revendication 4, caractérisée par le fait que la partie de cadre (5) intérieure comporte un profilé (21) élastique, notamment périphérique, qui est monté par serrage et dans lequel un élément de remplissage (22) qui presse le profilé (21) contre la glace (18) est inséré par serrage, éventuellement dans un évidement périphérique.

6. Fenêtre selon l'une des revendications 1 à 5, caractérisée par le fait que les glaces sont partiellement tenues dans un cadre (14) supplémentaire qui est disposé sur le cadre (2).

7. Fenêtre selon la revendication 6, caractérisée par le fait que le cadre (14) supplémentaire comporte des parties de cadre (15, 16) extérieure et intérieure qui sont liées entre elles par l'intermédiaire d'une couche d'adhésif (17) qui présente une conductibilité thermique inférieure à celle du matériau du cadre.

8. Fenêtre selon l'une des revendications 1 à 7, caractérisée par le fait qu'un cadre (24), notamment avec des parties de cadre (26, 27) extérieure et intérieure qui sont liées entre elles par collage par l'intermédiaire d'une couche d'adhésif (28) qui présente une conductibilité thermique inférieure à celle des matériaux des parties de cadre (26, 27), est articulé sur le cadre (14) supplémentaire.

9. Fenêtre selon l'une des revendications 1 à 8, caractérisée par le fait que la partie de (26) extérieure du cadre articulé (24) est articulée sur la partie extérieure (15) du cadre (14) supplémentaire.

10. Fenêtre selon l'une des revendications 1 à 9, caractérisée par le fait que la partie (27) intérieure du cadre articulé (24) est fixée sur la partie (15) intérieure du cadre supplémentaire (14) par des moyens d'arrêt (31).

11. Fenêtre selon l'une des revendications 1 à 10, caractérisée par le fait que les parties de cadre intérieures et/ou extérieures (4, 5, 15, 16, 26, 27) présentent des évidements intérieurs périphériques qui, le cas échéant, sont remplis de matériaux faiblement conducteurs de la chaleur, par exemple matériaux moussés, fibres ou analogues.
